(19) Europäisches Patentamt
European Patent Office
Office européen des brevets

(11) **EP 2 042 888 B1**

(12) **EUROPÄISCHE PATENTSCHRIFT**

(45) Veröffentlichungstag und Bekanntmachung des Hinweises auf die Patenterteilung:
**23.12.2015 Patentblatt 2015/52**

(51) Int Cl.:
*G01S 13/86* (2006.01)   *G01S 1/00* (2006.01)
*G01S 7/40* (2006.01)

(21) Anmeldenummer: **08105148.4**

(22) Anmeldetag: **27.08.2008**

(54) **Steuerverfahren und Vorrichtung zum automatischen Abschalten von Nahbereichsradar**

Control method and device for automatically switching off close-range radar

Procédé de commande et dispositif d'extinction automatique de radars de proximité

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.09.2007 DE 102007046767**

(43) Veröffentlichungstag der Anmeldung:
**01.04.2009 Patentblatt 2009/14**

(73) Patentinhaber: **ROBERT BOSCH GMBH**
**70442 Stuttgart (DE)**

(72) Erfinder: **Siegle, Gert**
**31139, Hildesheim (DE)**

(56) Entgegenhaltungen:
DE-A1-102005 060 131    JP-A- 2002 359 682
US-B1- 6 201 493    US-B1- 6 483 452

**Beschreibung**

Technisches Gebiet

Die Erfindung betrifft ein Steuerverfahren zum Steuern einer elektronisch steuerbaren Vorrichtung in Kraftfahrzeugen insbesondere zum Aussenden elektromagnetischer Strahlen, vorzugsweise ein Nahbereichs-Radargerät.

Stand der Technik

Es sind elektronische Geräte bekannt, die elektromagnetische Wellen aussenden, wie beispielsweise Radargeräte. Solche Radargeräte sind u.a. als Nahfeldradargeräte in Kraftfahrzeugen bekannt geworden, die eingesetzt werden, um beispielsweise Hindernisse aufzuspüren, die für den Fahrer noch nicht erkennbar sind, oder um mit Seitenradar herannahende Fahrzeuge oder Hindernisse so frühzeitig zu erkennen, dass beispielsweise elektronisch gesteuert eine Gurtstraffung oder gar eine Bremsung des Fahrzeugs initiiert werden kann, bevor eine Aktion des Fahrzeugs durch den Fahrer erfolgen würde, weil er Gefahr oder Hindernis noch nicht erkannt hat oder nicht erkennen kann. Solche Vorrichtungen dienen daher dazu, die Sicherheit zu erhöhen, um potentielle Kollisionen frühzeitig zu erkennen und möglichst zu vermeiden - zumindest aber deren Auswirkungen möglichst gering zu halten. Auch können solche Nahfeldradargeräte beispielsweise mit dazu verwendet werden, teil- oder vollautomatisierte Einparkvorgänge mit zu steuern.

Solche Nahbereichs-Radargeräte, die im gepulsten Betrieb im 24 GHz-Bereich (21,65 - 26,65 GHz) arbeiten dürfen, werden wegen ihrer großen Bandbreite auch als Ultra-Wide-Band Radar (UWB Radar) bezeichnet. Für ihren Betrieb sind innerhalb der Europäischen Union Beschränkungen zum Betrieb beschlossen worden, wonach bis zum 30.06.2013 nur maximal 7% aller zugelassenen Fahrzeuge pro Land mit diesen so genannten Ultra-Wide-Band Radar-Geräten im 24 GHz-Bereich (21,65 - 26,65 GHz) ausgerüstet sein dürfen. Weiterhin ist beschlossen worden, dass im Frequenzbereich von 22.21-24.00 GHz in festgelegten Sicherheitszonen zum Schutz von astronomischen Stationen solche Radargeräte nicht betrieben werden dürfen. Ab 30.07.2007 müssen sich diese Geräte zum Schutz dieser Zonen darin automatisch und ohne Fahrereinfluss selbsttätig deaktivieren.

Die meisten Länder der Europäischen Union haben die vorgenannten Bestimmungen bereits umgesetzt und haben oder werden zu den Koordinaten und Ausdehnungen der Sicherheitszonen Ausführungen machen.

Für Fahrer und Fahrzeug entsteht damit die Schwierigkeit des Wissens um diese Sicherheitszone und/oder ihrer sicheren Erkennung, damit im Bereich jeder einzelnen Sicherheitszone das Gerät deaktiviert werden kann. Hinzu kommt, dass in vielen Fällen die Zonen noch nicht bekannt oder nicht in der Ausdehnung definiert sind. Auch ist es vorstellbar, dass später weitere heute unbekannte Zonen nachdefiniert werden könnten.

Die US 6,201,493 B1 bildet einen allgemeinen Stand der Technik mit einem Radardetektor, aufweisend ein Positionsverfolgungssystem, wie einem globalen Positions- Satellitensystem (GPS), das die Position des Fahrzeugs, in dem der Radardetektor angeordnet ist, nachverfolgen kann. Ferner ist ein Prozessor vorgesehen, der es ermöglicht, die Position der Quellen von "falschen Alarmen" zu "lernen". Die "gelernten" Informationen werden in einer Datenbank der "falschen Alarme" gespeichert. Wenn ein Alarm ermittelt wird, wird zwischen der augenblicklichen Position des Fahrzeugs und den gespeicherten Informationen, die auf bekannte Positionen hinweisen, an denen falsche Alarme zuvor aufgetreten sind, ein Vergleich angestellt. Wenn der Vergleich positiv ist, ist der Alarm deaktiviert, oder der Benutzer wird auf andere Weise darüber informiert, dass der Alarm wahrscheinlich falsch ist.

Aus der Druckschrift DE 10 2005 060 131 A1 ist eine Vorrichtung zum Aussenden elektromagnetischer Strahlen bekannt, wobei ferner ein GPS Sensor vorgesehen ist, um die Position der elektronisch steuerbaren Vorrichtung zu ermitteln. Weiterhin ist ein Steuergerät vorgesehen, das mittels des GPS Sensors die aktuelle globale Position des Kraftfahrzeugs erhält. Hierzu müssen jedoch zuvor globale Positionsbereiche als Deaktivierungsbereiche im Steuergerät abgespeichert werden, in denen die elektromagnetischen Signale durch die Vorrichtung nicht ausgesendet werden. Folglich ist zu jedem Zeitpunkt und an jedem Ort eine Abfrage erforderlich, ob sich die Vorrichtung innerhalb oder außerhalb des Deaktivierungsbereiches befindet. Insbesondere können die Deaktivierungsbereiche nur durch Dateneingabe in das Steuergerät aktualisiert werden, beispielsweise, wenn die Position einer astronomischen Station verändert wird oder sich der erforderliche Deaktivierungsbereich ändert. Diese Daten betreffen folglich nicht nur die Position der astronomischen Station selbst, sondern den gesamten Deaktivierungsbereich. Nachteilhaft ist dabei insbesondere die statische Abfrage nach dem Vorhandensein des Deaktivierungsbereiches, sodass ein dynamisches Verfahren zur Bestimmung wünschenswert ist, wann eine Abschaltung der Vorrichtung erforderlich ist und wann nicht.

Darstellung der Erfindung, Aufgabe, lösung, Vorteile

Es ist die Aufgabe der vorliegenden Erfindung, ein vereinfachtes Steuerverfahren zum Steuern einer elektronisch steuerbaren Vorrichtung zum Aussenden elektromagnetischer Strahlen zu schaffen, mittels welchem oder welcher die oben geschilderten Probleme beseitigt oder vermindert werden können.

Die Aufgabe wird gelöst mit den Merkmalen von Anspruch 1, wonach ein Steuerverfahren zum Steuern einer elektronisch steuerbaren Vorrichtung zum Aussenden elektromagnetischer Strahlen geschaffen wird, bei welchem die Position der elektronisch steuerbaren Vorrichtung durch eine Vorrichtung zur Positionsbestimmung im Wesentlichen laufend ermittelt und erfindungsgemäß daraus zumindest ein Abstand zu zumindest einem vordefinierten Objekt bestimmt wird und im Falle, dass der Abstand von diesem vordefinierten Objekt geringer ist als ein vorgebbarer Grenzwert, die Vorrichtung automatisch deaktiviert wird oder sich selbsttätig deaktiviert und wobei die Abstandsermittlung nach einer vorgebbaren Näherungsformel mit einem Vergleich erfolgt, in welche die Koordinaten der aktuell bestimmten Position der elektronisch steuerbaren Vorrichtung und die Koordinaten der vordefinierten Objekte eingehen, ob der ermittelte Abstand unter dem Grenzwert liegt oder nicht, für Mitteleuropa lautet:

$$A \approx ((X_{20}*100+X_{21}*1{,}66+X_{22}*0{,}03-(X_{i0}*100+X_{i1}*1{,}66+X_{i2}*0{,}03))^2$$
$$+(Y_{20}*100+Y_{21}*1{,}66+Y_{22}*0{,}03-(Y_{i0}*100+Y_{i1}*1{,}66+Y_{i2}*0{,}03))^2)^{1/2}.$$

Die Angaben $X_{20}$, $X_{21}$, $X_{22}$ bzw. $Y_{20}$, $Y_{21}$ und $Y_{22}$ sind die aktuellen Koordinaten der Vorrichtung in Längenkoordinaten bzw. in Breitenkoordinaten wie bei GPS-Geräten angezeigt, nämlich in in ganzen geogr. Winkelgraden (hier mit Index 20), zudem ergänzenden geogr. Winkelminuten (hier mit Index 21) bzw. ergänzenden Winkelminuten (hier mit Index 22). Weiterhin sind die entsprechenden Angaben $X_{i0}$, $X_{i1}$, $X_{i2}$ bzw. $Y_{i0}$, $Y_{i1}$ und $Y_{i2}$ die Koordinaten des vordefinierten Objekts i nach Länge und Breite sind, wobei wiederum die Koordinaten mit dem Index i0 die ganzen geogr. Winkelgrade, die Angaben mit dem Index i1 die ganzen geogr. Winkelminuten und die Angaben mit dem Index i2 die geogr. Winkelsekunden angegeben sind. Dabei kann i als Laufindex für verschiedene vordefinierte Objekte dienen. Dabei können solche vordefinierten Objekte vorzugsweise radioastronomische Anlagen sein.

Die Faktoren 100, 1,66 und 0,03 sind für eine näherungsweise Berechnung in Mitteleuropa verwendbar und bedeuten die Anzahl Kilometer pro geogr. Winkelgrad bzw. pro geogr. Winkelminute und Winkelsekunde. Die Faktoren sind auch je nach Breitengrad genauer angebbar.

Die Vorrichtung zur Positionsbestimmung kann in die elektronisch steuerbare Vorrichtung integrierbar sein, auch können dabei alle in einer Liste verfügbaren vordefinierten Objekte beispielsweise sequentiell berücksichtigbar sein.

Dabei ist es erfindungsgemäß vorgesehen, wenn die elektronisch steuerbare Vorrichtung mit der Vorrichtung zur Positionsbestimmung verbunden ist und die Vorrichtung zur Positionsbestimmung der elektronisch steuerbaren Vorrichtung die aktuellen Positionsdaten übergibt und die elektronisch steuerbare Vorrichtung bestimmt, ob der Abstand geringer als ein Grenzwert ist.

Weiterhin ist es erfindungsgemäß vorgesehen, wenn eine Aktivierung der elektronisch steuerbaren Vorrichtung nur durchführbar ist, wenn die Vorrichtung zur Positionsbestimmung betriebsbereit ist, also insbesondere ein Satellitensignal, wie beispielsweise ein Galileo- oder GPS-Signal, empfängt oder im Falle einer Navigationseinrichtung zusammen mit der Kartenstützung durch die mitgeführte digitale Karte seine Position auf der gefahrenen Route laufend verfolgt - also "eingephast ist".

Auch ist es alternativ zweckmäßig, wenn die elektronisch steuerbare Vorrichtung mit der Vorrichtung zur Positionsbestimmung verbunden ist und diese Vorrichtung zur Positionsbestimmung die aktuelle Position ermittelt und selbst bereits bestimmt, ob der Abstand geringer als ein Grenzwert ist und der elektronisch steuerbaren Vorrichtung ein Signal zum Deaktivieren übermittelt.

Weiterhin ist es zweckmäßig, wenn die Vorrichtung zur Positionsbestimmung vorzugsweise eine satellitengestützte, wie etwa eine Galileo- oder GPS-gestützte Navigationsvorrichtung oder Ortungsvorrichtung umfasst.

Die Aufgabe wird ferner erreicht durch eine elektronisch steuerbare Vorrichtung zum Aussenden elektromagnetischer Strahlen, die mit einer Vorrichtung zur Positionsbestimmung in Verbindung steht, mittels welcher die Position der elektronisch steuerbaren Vorrichtung ermittelbar ist und im Falle, dass die elektronisch steuerbare Vorrichtung sich näher als ein vorgebbarer Grenzwert von einem vordefinierten Objekt befindet, die Vorrichtung automatisch deaktivierbar ist oder sich selbsttätig deaktiviert.

Dabei ist es zweckmäßig, wenn die Vorrichtung zur Positionsbestimmung eine vorzugsweise satellitengestützte-, wie Galileo- oder GPS-gestützte Navigations- oder Ortungsvorrichtung umfasst. Vorteilhafte Weiterbildungen sind in den Unteransprüchen beschrieben.

Kurze Beschreibung der Zeichnungen

Nachstehend wird die Erfindung auf der Grundlage eines Ausführungsbeispiels anhand der Zeichnungen näher erläutert. Es zeigen:

Fig. 1   ein Bockschaltbild zur Erläuterung der erfindungsgemäßen Vorrichtung;

Fig. 2   ein Bockschaltbild zur Erläuterung des erfindungsgemäßen Verfahrens;

Fig. 3   eine schematische Darstellung zur Erläuterung der Erfindung; und

Fig. 4   eine schematische Darstellung zur Erläuterung der Erfindung.

Bevorzugte Ausführung der Erfindung

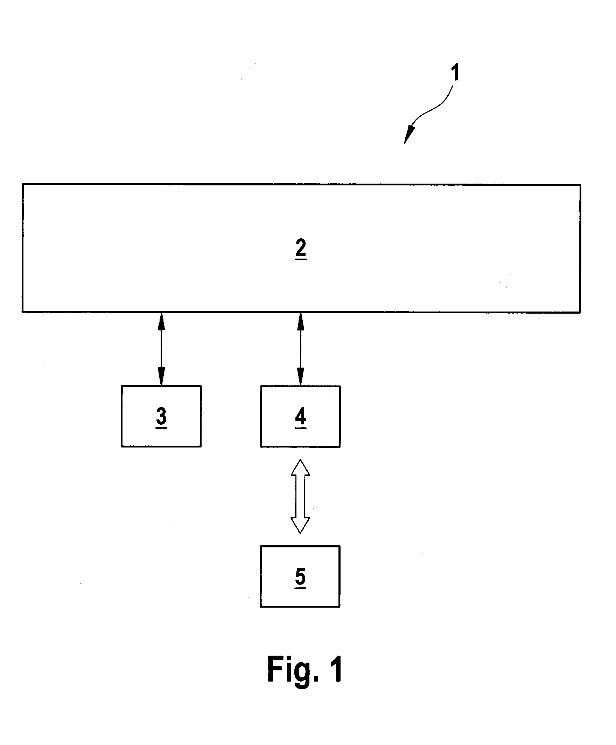

Die Figur 1 zeigt ein Blockschaltbild 1 einer elektronisch steuerbaren Vorrichtung 2 zum Aussenden elektromagnetischer Strahlen - im vorliegenden Fall also vorzugsweise des Nahbereichsradars. Dazu weist die Vorrichtung 2 zumindest ein Sendemittel 3 auf, mittels welchem elektromagnetische Strahlen, vorzugsweise Radarstrahlen nach dem Stand der Technik zumindest ausgesandt werden und gegebenenfalls nach Reflexion an einem Gegenstand oder Hindernis auch wieder mittels eines beispielsweise integrierten - ggf. aber auch eines abgesetzten - Sensors wieder empfangen werden können. Aus der Laufzeit des Signals können dann Abstandsdaten etwa zu einem Hindernis oder einem herannahenden Fahrzeug ermittelt werden. Eine solche Vorrichtung 2 kann auch eine Nahfeldradarvorrichtung sein. Die Daten der Vorrichtung können von der elektronisch steuerbaren Vorrichtung 2 zur Fahrerwarnung oder zur Steuerung von weiteren Vorrichtungen beispielsweise in einem Fahrzeug herangezogen werden wie beispielsweise einer Vorrichtung zur Gurtstraffung oder einer Bremsanlage zum Abbremsen eines Fahrzeugs. Auch kann beispielsweise eine Lenkung ansteuerbar sein, um einen automatisierten Einparkvorgang zu ermöglichen.

Die elektromagnetischen Radarstrahlen liegen bevorzugt im Frequenzbereich von 21,65 - 26,65 GHz, es können aber auch andere Frequenzen verwendet werden.

Die Vorrichtung 2 ist weiterhin mit einer Vorrichtung zur Positionsbestimmung 4 verbunden, mittels welcher die geographische Position nach mindestens Längen- und Breitengrad der elektronisch steuerbaren Vorrichtung 2 ermittelt wird. Die Vorrichtung zur Positionsbestimmung 4 nutzt dabei vorzugsweise Signale von Navigationssatelliten oder Navigationssystemen, wie des GPS-Systems oder des Galileo-Systems, um die aktuelle Position bzw. die aktuellen Koordinaten der Vorrichtung 2 zu bestimmen.

Gemäß der Erfindung wird ein automatisches Abschalten oder automatische Deaktivierung der elektronisch steuerbaren Vorrichtung 2 bzw. der Aussendung von elektromagnetischen Strahlen ausgelöst , falls sich die Vorrichtung 2 näher zu einem vordefinierten Objekt 21 befindet als ein vordefinierter Abstand. Dabei ist unter der Aktivierung oder Deaktivierung der Vorrichtung 2 bevorzugt das Aktivieren oder Deaktivieren der Aussendung der elektromagnetischen Strahlung durch die Vorrichtung 2 zu verstehen. Bevorzugt wird eine automatische Deaktivierung durchgeführt, wobei die Vorrichtung sich selbsttätig deaktiviert oder das Aussenden der elektromagnetischen Strahlen beendet.

Die mit der elektronisch steuerbaren Vorrichtung 2 verbundene Vorrichtung zur Positionsbestimmung 4 ermittelt bevorzugt die aktuelle Position der Vorrichtung zur Positionsbestimmung 4 und/oder der elektronisch steuerbaren Vorrichtung 2 und übergibt der elektronisch steuerbaren Vorrichtung 2 entweder ein Positionssignal, so dass die elektronisch steuerbare Vorrichtung 2 bestimmen kann, ob die aktuelle Position in einer vordefinierten Zone liegt, oder die Vorrichtung zur Positionsbestimmung 4 prüft anhand der aktuell ermittelten Position, ob die aktuelle Position in einem vordefinierten Abstand oder näher von einem vordefinierten Objekt entfernt ist und gibt ein entsprechendes Signal an die elektronisch steuerbare Vorrichtung 2 weiter, so dass die elektronisch steuerbare Vorrichtung 2 sich oder die Aussendung der elektromagnetischen Strahlen deaktivieren kann. Liegt die ermittelte Position nicht in einem vordefinierten Abstand oder näher von einem vordefinierten Objekt, so kann sich die Vorrichtung 2 oder die Aussendung der elektromagnetischen Strahlen entweder deaktivieren oder wieder aktivieren, nachdem sie sich zuvor beispielsweise aufgrund des bestimmten Abstandes zu einem vordefinierten Objekts deaktiviert hat.

Die Vorrichtung zur Positionsbestimmung 4 weist vorzugsweise Mittel 5 auf, die einer satellitengestützten, wie vorzugsweise Galileo- oder GPSgestützten Navigations- oder Ortungsvorrichtung entsprechen oder mit einer solchen Vorrichtung verbunden sind. Diese Mittel 5 können als verbindbare Einheit mit der Vorrichtung 2 oder 4 ausgebildet sein, sie können aber auch in eine Vorrichtung 2 oder 4 integriert sein.

Dabei können diese Mittel 5 in Signalkontakt stehen mit einem Satellitensystem, welches Signale oder Positionsdaten sendet, welche die Vorrichtung 4 oder die Mittel 5 empfangen um daraus eine Positionsbestimmung durchzuführen.

Insgesamt ist es vorteilhaft, wenn die Vorrichtung zur Positionsbestimmung 4 mit der elektronisch steuerbaren Vorrichtung 2 drahtlos oder drahtgebunden verbunden ist oder die Vorrichtung zur Positionsbestimmung 4 in die elektronisch steuerbare Vorrichtung 2 integriert ist.

Gemäß eines erfindungsgemäßen Ausführungsbeispiels ist eine Aktivierung der elektronisch steuerbaren Vorrichtung 2 vorteilhafter Weise nur durchführbar, wenn die Vorrichtung zur Positionsbestimmung betriebsbereit ist, also insbesondere ein Satellitensignal, wie ein Galileo- oder GPS-Signal, empfängt.

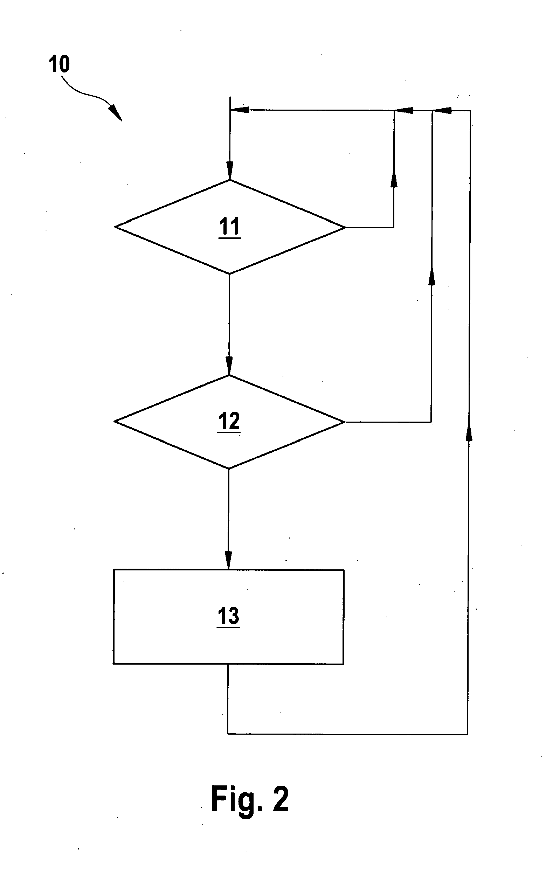

Die Figur 2 zeigt ein Blockschaltbild 10 zur Erläuterung eines Ausführungsbeispieles eines erfindungsgemäßen Verfahrens. In Block 11 wird abgefragt, ob eine Verbindung zu einer Positionsbestimmungsvorrichtung 4 vorliegt und diese aktiv ist. In Block 12 wird abgefragt, ob eine Position vorliegt, die sich in einem vordefinierten Abstand von einem vordefinierten Objekt befindet oder diesem näher ist als der vordefinierte Abstand. Ist dies nicht der Fall, wird die Vorrichtung 13 zur Aussendung elektromagnetischer Strahlen aktiviert oder sie bleibt aktiviert, siehe Block 13. Anderenfalls wird sie nicht aktiviert oder wird deaktiviert.

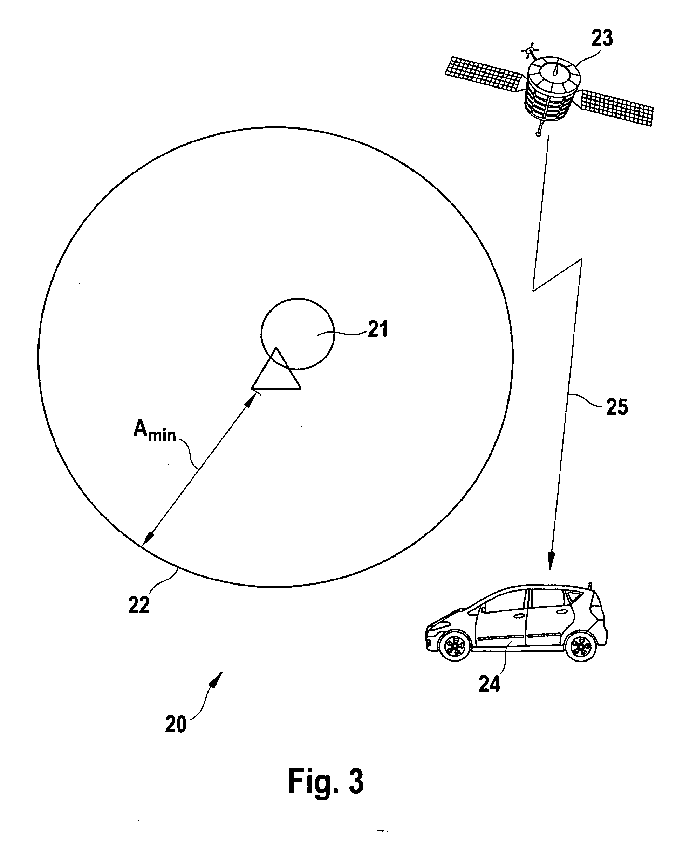

Besonders vorteilhaft ist es, wenn eine Vorrichtung 2 zur Aussendung von elektromagnetischen Strahlen, wie ein Radargerät oder Nahbereichsradargerät beispielsweise eines Kraftfahrzeugs 24 nur dann in Funktion geht oder aktivierbar ist oder sich aktiviert, wenn die Vorrichtung zur Positionsbestimmung 4 aktiv ist und eine aktuelle Position bestimmen kann, weil sie in - ggf. wiederholt - Ortungssignale 25 von zumindest drei - vorteilhafter Weise aber noch weiteren - Navigationssatelliten 23 steht, siehe Figur 3, in welcher in einer schematischen Darstellung 20 die Erfindung erläutert wird.

Gemäß des erfindungsgemäßen Gedankens ermittelt die Vorrichtung 4 den Abstand R zu einem vordefinierten Objekt 21, wie beispielsweise einer astronomischen Einrichtung, anhand von den aktuellen Positionskoordinaten der Vorrichtung 4 und den verfügbaren Koordinaten des vordefinierten Objekts 21. Danach erfolgt der Vergleich, ob der ermittelte Abstand unter einem vorgebbaren Grenzwert $A_{min}$,22 liegt oder nicht.

Dazu kann eine näherungsweise Abstandsberechnung durchgeführt werden.

Erfindungsgemäß kann ein Abstand A in Kilometern näherungsweise berechnet werden:

$$A \approx ((X_{20} * 100 + X_{21} * 1{,}66 + X_{22} * 0{,}03 - (X_{i0} * 100 + X_{i1} * 1{,}66 + X_{i2} * 0{,}03))^2$$
$$+ (Y_{20} * 100 + Y_{21} * 1{,}66 + Y_{22} * 0{,}03 - (Y_{i0} * 100 + Y_{i1} * 1{,}66 + Y_{i2} * 0{,}03))^2)^{\frac{1}{2}}$$

mit: $X_{20}$, $X_{21}$, $X_{22}$ bzw. $Y_{20}$, $Y_{21}$ und $Y_{22}$ als die aktuellen Koordinaten der Vorrichtung 4 in Längenkoordinaten bzw. in Breitenkoordinaten, wobei die Koordinaten mit dem Index 20 in Bogengrad, die Koordinaten mit dem Index 21 in Bogenminuten und die Koordinaten mit dem Index 22 in Bogensekunden angegeben sind. Weiterhin sind die Koordinaten $X_{i0}$, $X_{i1}$, $X_{i2}$ bzw. $Y_{i0}$, $Y_{i1}$ und $Y_{i2}$ die Koordinaten des vordefinierten Objekts i nach Länge und Breite sind, wobei wiederum die Koordinaten mit dem Index i0 in Bogengrad angegeben sind, die Koordinaten mit dem Index i1 in Bogenminuten und die Koordinaten mit dem Index i2 in Bogensekunden angegeben sind. Dabei kann i als Laufindex für verschiedene vordefinierte Objekte dienen. Dabei können solche vordefinierten Objekte vorzugsweise radioastronomische Anlagen sein.

Die Faktoren 100, 1,66 und 0,03 sind für eine näherungsweise Berechnung in Mitteleuropa verwendbar und bedeuten die Anzahl Kilometer pro Bogengrad bzw. pro Bogenminute und Bogensekunde. Die Faktoren sind auch je nach Breitengrad genauer angebbar.

Vorteilhaft ist es, wenn der erfindungsgemäßen Vorrichtung 2 eine Liste aller vordefinierter Objekte vorliegt und damit auch die Koordinaten der Objekte 21 vorliegen. Allerdings kann eine solche Liste vordefinierbarer Objekte 21 auch aktualisierbar sein, wie beispielsweise mittels Datenübertragung. In einem solchen Fall würde die Liste ergänzbar sein oder auch bei Wegfall schützenswerter Objekte kürzbar sein. So kann eine drahtlose oder drahtgebundene Übertragung einer aktualisierten Liste durchgeführt werden. Auch kann eine solche Aktualisierung durch Aktualisierung einer digitalen Karte für eine Navigationsvorrichtung oder eine Vorrichtung zur Positionsbestimmung 4 durchgeführt werden, wie beispielsweise von einer CD-ROM oder DVD oder von einem anderen Speichermedium. Auch kann die Information oder Aktualisierung drahtlos per Mobilkommunikation oder per Rundfunk, Verkehrsfunkkanal oder Ähnlichem erfolgen.

Die Abstandsermittlung kann in der erfindungsgemäßen Vorrichtung 2 erfolgen oder in einer Vorrichtung zur Positionsbestimmung 4, so dass ein Signal ausgebbar ist, dass der Abstand geringer ist als ein vorgebbarer Grenzwert $A_{i,min}$, so dass sich die Vorrichtung zum Aussenden elektromagnetischer Strahlen selbst deaktivieren kann oder deaktiviert wird.

Liegt ein Abstand A vor, der größer ist als ein vorgebbarer Grenzwert $A_{i,min}$, kann sich die Vorrichtung zum Aussenden elektromagnetischer Strahlen wieder aktivieren oder sie kann wieder aktiviert werden.

Beispielsweise kann der Grenzwert des Abstands generell auf einen vorgebbaren Wert $A_{i,min}$ festgelegt sein, wie beispielsweise auf 5 km. Auch kann der Grenzwert des Abstands $A_{i,min}$ pro Objekt i festgelegt sein, wobei er durchaus auch von Objekt zu Objekt zum Teil verschieden sein kann. Auch kann der Grenzwert des Abstands für zumindest einzelne Objekte i veränderlich sein, wobei dann der Wert des Grenzwerts durchaus auch aktualisierbar sein kann, wie über eine Datenverbindung.

Kann für ein Objekt 21 ein Wert des Grenzwerts nicht ermittelt werden, so wäre die Vorrichtung 2 zum Aussenden elektromagnetischer Strahlen automatisch abzuschalten oder zu deaktivieren. In einem solchen Fall wäre es vorteilhaft, zumindest eine Fahrerwarnung auszugeben, so dass sich der Fahrer des Fahrzeugs auf die Deaktivierung der Vorrichtung 2 einstellen kann und seinen Fahrstil daran anpassen kann. Eine solche Fahrerwarnung kann beispielsweise akustisch und/oder optisch erfolgen. Auch kann bei einer Aktivierung eine akustische und/oder optische Information erfolgen. Dazu kann eine Warntonausgabe oder eine Sprachausgabe angesteuert werden. Auch kann eine optische Warnung durch eine Anzeigelampe oder mittels eines Anzeigebildschirms erfolgen.

Weiterhin kann die Aktivierung bzw. Deaktivierung der Vorrichtungen zum Aussenden elektromagnetischer Strahlen auch abhängig von kalendarischen Informationen oder Daten sein. Dabei kann beispielsweise eine datums- und/oder uhrzeitabhängige Deaktivierung oder Aktivierung erfolgen. Dazu können Datums- oder Uhrzeitinformationen abgespeichert sein oder empfangbar sein, zu welchen die Vorrichtungen 2 zum Aussenden elektromagnetischer Strahlen zu deaktivieren wäre oder zu welchen die Vorrichtungen 2 zum Aussenden elektromagnetischer Strahlen aktivierbar wären. Dann würde die Aktivierung oder Deaktivierung der Vorrichtungen 2 zum Aussenden elektromagnetischer Strahlen entsprechend angesteuert werden können.

Zur erleichterten Identifizierung von Objekten 21 wäre es weiterhin vorteilhaft, wenn deren Standorte in einer digitalen Karte aufgenommen sind. Dann könnte eine Navigationsvorrichtung oder eine Vorrichtung zur Ortung auf diese Dateninformation zugreifen und ein Anschaltsignal an die Vorrichtungen zum Aussenden elektromagnetischer Strahlen abgeben, wie ein Schaltsignal oder wie ein Schaltimpuls, damit sich die Vorrichtung 2 bei Vorliegen eines solchen Signals selbsttätig deaktivieren kann.

Auch kann eine Navigationsvorrichtung oder eine Ortungsvorrichtung die Berechnung des Abstandes des aktuellen Standorts von einem solchen Objekt 21 bestimmen und über eine Schnittstelle mit der Vorrichtungen zum Aussenden elektromagnetischer Strahlen eine Deaktivierung oder Aktivierung durch Schaltsignale ansteuern.

In einem solchen Fall ist es vorteilhaft, wenn die Vorrichtungen zum Aussenden elektromagnetischer Strahlen sich nur aktivieren, wenn die Navigationsvorrichtung aktiv ist und eine Positionsbestimmung durchführbar ist. Liegen diese Bedingungen nicht vor, können die Vorrichtungen zum Aussenden elektromagnetischer Strahlen derart gesteuert sein, dass sie sich dann nicht aktivieren lassen oder sich nicht aktivieren.

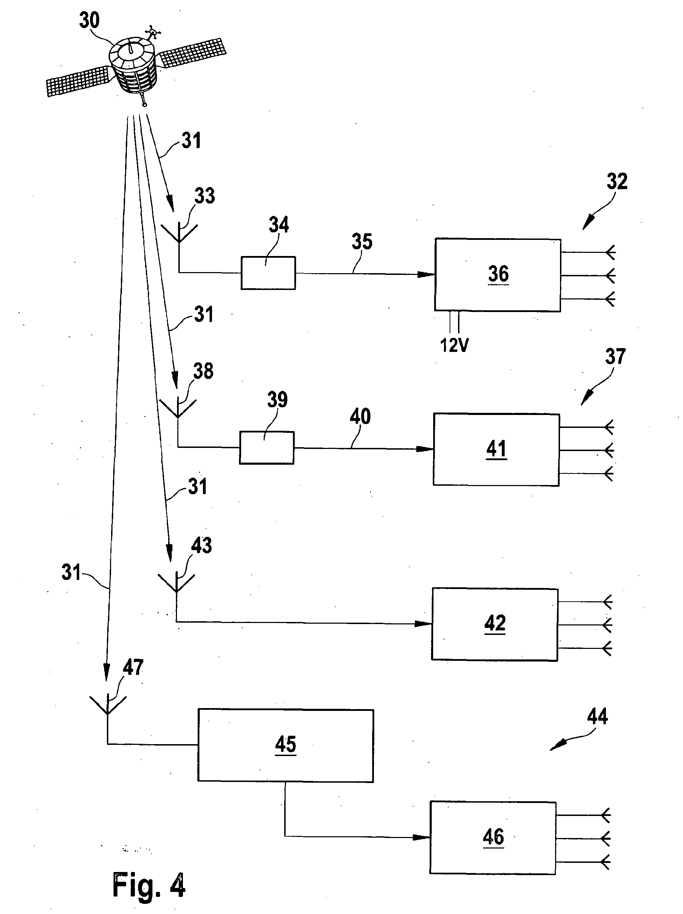

Die Figur 4 erläutert weiterhin in einer schematischen Darstellung die Erfindung. Mittels eines Navigationssatellitensystems mit jeweils mindestens drei gleichzeitig empfangbaren Satelliten 30 können Positionsinformationen 31 empfangen werden. Eine Vorrichtung 32 weist dazu eine Antenne 33 auf, mittels welcher die Daten oder Signale empfangen werden können. Ein Satellitenempfänger 34 für GPS und/oder Galileo-Daten empfängt die Positionsdaten und/oder ermittelt anhand der empfangenen Daten die aktuelle Position und sendet an die Vorrichtung 36 zur Aussendung elektromagnetischer Strahlen, wie Nahbereichsradar, ein Schaltsignal 35 zum Deaktivieren oder zum Aktivieren der Vorrichtung. Der Satellitenempfänger ist in diesem Ausführungsbeispiel mit einer Steuer- oder Recheneinheit versehen, welche aus der aktuellen Positionsinformation den aktuellen Abstand zu einem vordefinierten Objekt bestimmt und ein Schaltsignal generiert, wenn der Abstand unter einem vorgebbaren Grenzwert liegt.

Eine weitere erfindungsgemäße Vorrichtung 37 weist eine Antenne 38 auf, mittels welcher die Daten oder Signale 31 empfangen werden können. Ein Satellitenempfänger 39 für GPS und/oder Galileo-Daten empfängt die Positionsdaten 31 und/oder ermittelt anhand der empfangenen Daten 31 die aktuelle Position und sendet diese Positionsdaten 40 an die Vorrichtung 41 zur Aussendung elektromagnetischer Strahlen, wie ein Nahbereichsradargerät.

Die Vorrichtung 41 bestimmt mittels der integrierten Steuer- oder Rechnereinheit den Abstand zwischen der aktuellen Position des Fahrzeugs und einem vordefinierten Objekt und bei Unterschreiten eines Grenzwerts deaktiviert es sich, anderenfalls würde es sich aktivieren oder würde aktivierbar sein, wenn der Grenzwert überschritten ist.

Weiterhin ist eine weitere erfindungsgemäße Vorrichtung 42 zu erkennen, welche eine Antenne 43 aufweist, mittels welcher die Daten oder Signale empfangen werden können. Die Vorrichtung 42 umfasste einen Satellitenempfänger für GPS und/oder Galileo-Daten und empfängt die Positionsdaten und/oder ermittelt anhand der empfangenen Daten die aktuelle Position. Weiterhin umfasst die Vorrichtung 42 die Vorrichtung zur Aussendung elektromagnetischer Strahlen, wie ein Nahbereichsradargerät. Entsprechend bestimmt die Vorrichtung 42 mittels der integrierten Steuer- oder Rechnereinheit den Abstand zwischen der aktuellen Position des Fahrzeugs und einem vordefinierten Objekt und bei Unterschreiten eines Grenzwerts deaktiviert es sich, anderenfalls würde es sich aktivieren oder würde aktivierbar sein, wenn der Grenzwert überschritten ist.

Weiterhin ist eine weitere erfindungsgemäße Vorrichtung 44 zu erkennen, welche neben einer Vorrichtung 45 zur Positionsbestimmung, wie vorzugsweise eine Navigationsvorrichtung oder Ortungsvorrichtung, eine Vorrichtung 46 zum Aussenden von elektromagnetischen Strahlen umfasst. Die Vorrichtung 45 umfasst einen Satellitenempfänger für GPS- und/oder Galileo-Daten und empfängt die Signale oder Positionsdaten 31 und/oder ermittelt anhand der empfangenen Daten die aktuelle Position. Weiterhin umfasst die Vorrichtung 45 eine integrierten Steuer- oder Rechnereinheit mittels welcher ein Abstand zwischen der aktuellen Position des Fahrzeugs und einem vordefinierten Objekt ermittelbar ist, wobei bei Unterschreiten eines Grenzwerts ein Schaltsignal ausgesendet wird an die Vorrichtung 46 zum Aussenden elektromagnetischer Strahlen, woraufhin diese Vorrichtung 46 sich deaktiviert, anderenfalls würde sie sich ggf. aktivieren oder würde aktivierbar sein, wenn der Grenzwert überschritten ist und ein entsprechendes Schaltsignal gesendet werden würde.

**Patentansprüche**

1. Steuerverfahren zum Steuern einer elektronisch steuerbaren Vorrichtung (2) zum Aussenden elektromagnetischer Strahlen, bei welchem die Position der elektronisch steuerbaren Vorrichtung (2) durch eine Vorrichtung zur Positionsbestimmung (4) ermittelt wird, **dadurch gekennzeichnet, dass**

   - die Vorrichtung zur Positionsbestimmung (4) in die elektronisch steuerbare Vorrichtung (2) integrierbar ist und dass die Vorrichtung zur Positionsbestimmung (4) der elektronisch steuerbaren Vorrichtung (2) die aktuellen Positionsdaten übergibt und die elektronisch steuerbare Vorrichtung bestimmt, ob der Abstand geringer als ein Grenzwert ist, und
   - **dass** aus der Ermittlung der Position zumindest der Abstand zu zumindest einem vordefinierten Objekt (21) bestimmt wird und im Falle, dass der Abstand von einem vordefinierten Objekt (21) geringer als ein Grenzwert ist, die Vorrichtung automatisch deaktiviert wird oder sich selbsttätig deaktiviert und wobei
   - die Abstandsermittlung nach einer vorgebbaren Näherungsformel mit einem Vergleich erfolgt, in welche die Koordinaten der aktuell bestimmten Position der elektronisch steuerbaren Vorrichtung (2) und die Koordinaten der vordefinierten Objekte (21) eingehen, ob der ermittelte Abstand unter dem Grenzwert liegt oder nicht, wobei die Näherungsformel lautet:

   $$A \approx ((X_{20}*100+X_{21}*1,66+X_{22}*0,03-(X_{i0}*100+X_{i1}*1,66+X_{i2}*0,03))^2 +(Y_{20}*100+Y_{21}*1,66+Y_{22}*0,03-(Y_{i0}*100+Y_{i1}*1,66+Y_{i2}*0,03))^2)^{1/2}$$

   mit:

   - $X_{20}, X_{21}, X_{22}$ bzw. $Y_{20}, Y_{21}$ und $Y_{22}$ aktuelle Koordinaten der Vorrichtung in Längengraden, Längenminuten und Längensekunden bzw. in Breitengraden, Breitenminuten und Breitensekunden,
   - $X_{i0}, X_{i1}, X_{i2}$ bzw. $Y_{i0}, Y_{i1}$ und $Y_{i2}$ die Koordinaten des vordefinierten Objekts i in Längengraden, Längenminuten und Längensekunden bzw. in Breitengraden, Breitenminuten und Breitensekunden,
   - i ist Laufindex für verschiedene vordefinierte Objekte.

2. Steuerverfahren nach Anspruch 1, **dadurch gekennzeichnet, dass** die elektronisch steuerbare Vorrichtung (2) mit einer Vorrichtung zur Positionsbestimmung (4) verbunden ist und die Vorrichtung zur Positionsbestimmung (4) der elektronisch steuerbaren Vorrichtung (2) die aktuellen Positionsdaten übergibt und die elektronisch steuerbare Vorrichtung bestimmt, ob der Abstand geringer als ein Grenzwert ist.

3. Steuerverfahren nach Anspruch 1, **dadurch gekennzeichnet, dass** die elektronisch steuerbare Vorrichtung (2) mit der Vorrichtung zur Positionsbestimmung (4) verbunden ist und die Vorrichtung zur Positionsbestimmung (4) die aktuelle Position ermittelt und bestimmt, ob der Abstand geringer als ein Grenzwert ist und der elektronisch steuerbaren Vorrichtung (2) ein Signal zum Deaktivieren übermittelt.

4. Steuerverfahren nach einem der vorhergehenden Ansprüche, **dadurch gekennzeichnet, dass** die Vorrichtung zur Positionsbestimmung (4) eine vorzugsweise satellitengestützte, wie Galileo- oder GPS-gestützte Navigationsvorrichtung oder Ortungsvorrichtung umfasst.

**Claims**

1. Control method for controlling an electronically controllable device (2) for emitting electromagnetic beams, in the case of which the position of the electronically controllable device (2) is determined by a position-determining device (4), **characterized in that**

   - the position-determining device (4) can be integrated into the electronically controllable device (2), and **in that** the position-determining device (4) transfers the current position data to the electronically controllable device (2), and the electronically controllable device determines whether the distance is less than a limit value, and
- **in that** at least the distance of at least one predefined object (21) is determined from the determination of the position, and in the case that the distance from a predefined object (21) is less than a limit value, the device is automatically deactivated or deactivates itself, and
- using a prescribable approximation formula to which the coordinates of the currently determined position of the electronically controllable device (2) and the coordinates of the predefined objects (21) are substituted, the distance being determined by comparing whether the determined distance is less than the limit value or not, the approximation formula being:

$$A \approx ((X_{20}*100 + X_{21}*1.66 + X_{22}*0.03 - (X_{i0}*100 + X_{i1}*1.66 + X_{i2}*0.03))^2 + (Y_{20}*100 + Y_{21}*1.66 + Y_{22}*0.03 - (Y_{i0}*100 + Y_{i1}*1.66 + Y_{i2}*0.03))^2)^{1/2}$$

in which:

- $X_{20}$, $X_{21}$, $X_{22}$ and, respectively, $Y_{20}$, $Y_{21}$ and $Y_{22}$ are the current coordinates of the device in degrees of longitude, minutes of longitude and seconds of longitude, and, respectively, in degrees of latitude, minutes of latitude and seconds of latitude,
- $X_{i0}$, $X_{i1}$, $X_{i2}$ and, respectively, $Y_{i0}$, $Y_{i1}$ and $Y_{i2}$ are the coordinates of the predefined object i in degrees of longitude, minutes of longitude and seconds of longitude, and, respectively, in degrees of latitude, minutes of latitude and seconds of latitude,
- i is the running index for different predefined objects.

2. Control method according to Claim 1, **characterized in that** the electronically controllable device (2) is connected to a position-determining device (4), and the position-determining device (4) transfers the current position data to the electronically controllable device (2), and the electronically controllable device determines whether the distance is less than a limit value.

3. Control method according to Claim 1, **characterized in that** the electronically controllable device (2) is connected to the position-determining device (4), and the position-determining device (4) determines the current position and determines whether the distance is less than a limit value and transmits a signal for deactivation to the electronically controllable device (2).

4. Control method according to one of the preceding claims, **characterized in that** the position-determining device (4) includes a preferably satellite-navigation device, such as Galileo-assisted or GPS-assisted one, or a position-finding device.

**Revendications**

1. Procédé de commande destiné à commander un dispositif commandable électroniquement (2) pour émettre des rayons électromagnétiques, selon lequel la position du dispositif commandable électroniquement (2) est déterminée par un dispositif d'identification de la position (4),
**caractérisé en ce**

- **que** le dispositif d'identification de la position (4) peut être intégré dans le dispositif commandable électroniquement (2) et en ce que le dispositif d'identification de la position (4) délivre les données de position actuelles au dispositif commandable électroniquement (2) et le dispositif commandable électroniquement identifie si l'écart est inférieur à une valeur limite, et
- en ce qu'au moins l'écart par rapport à au moins un objet prédéfini (21) est identifié à partir de la détermination de la position et, dans le cas où l'écart par rapport à un objet prédéfini (21) est inférieur à une valeur limite, le dispositif est désactivé automatiquement ou se désactive lui-même, et
- la détermination de l'écart étant effectuée d'après une formule d'approximation pouvant être prédéfinie avec une comparaison, formule dans laquelle interviennent les coordonnées de la position identifiée actuellement du dispositif commandable électroniquement (2) et les coordonnées des objets prédéfinis (21), servant à déterminer si l'écart déterminé est inférieur ou non à la valeur limite, la formule d'approximation étant la suivante :

$$A = ((X_{20}*100 + X_{21}*1,66 + X_{22}*0,03 - (X_{i0}*100 + X_{i1}*1,66 + X_{i2}*0,03))^2 + ((Y_{20}*100 + Y_{21}*1,66 + Y_{22}*0,03 - (Y_{i0}*100 + Y_{i1}*1,66 + Y_{i2}*0,03))^2)^{\frac{1}{2}}$$

où :

- $X_{20}$, $X_{21}$, $X_{22}$ ou $Y_{20}$, $Y_{21}$, $Y_{22}$ désignent les coordonnées actuelles du dispositif en degrés de longitude, minutes de longitude et secondes de longitude ou en degrés de latitude, minutes de latitude et secondes de latitude,
- $X_{i0}$, $X_{i1}$, $X_{i2}$ ou $Y_{i0}$, $Y_{i1}$, $Y_{i2}$ désignent les coordonnées de l'objet prédéfini i en degrés de longitude, minutes de longitude et secondes de longitude ou en degrés de latitude, minutes de latitude et secondes de latitude,
- i désigne l'indice courant pour différents objets prédéfinis.

2. Procédé de commande selon la revendication 1, **caractérisé en ce que** le dispositif commandable électroniquement (2) est relié à un dispositif d'identification de la position (4) et le dispositif d'identification de la position (4) délivre les données de position actuelles au dispositif commandable électroniquement (2) et le dispositif commandable électroniquement identifie si l'écart est inférieur à une valeur limite.

3. Procédé de commande selon la revendication 1, **caractérisé en ce que** le dispositif commandable électroniquement (2) est relié au dispositif d'identification de la position (4) et le dispositif d'identification de la position (4) détermine la position actuelle et identifie si l'écart est inférieur à une valeur limite et transmet au dispositif commandable électroniquement (2) un signal de désactivation.

4. Procédé de commande selon l'une des revendications précédentes, **caractérisé en ce que** le dispositif d'identification de la position (4) comprend un dispositif de navigation ou un dispositif de localisation de préférence assisté par satellite, par exemple assisté par le système Galileo ou GPS.

Fig. 1

10

11

12

13

## Fig. 2

**Fig. 3**

**Fig. 4**

**EP 2 042 888 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6201493 B1
- DE 102005060131 A1